# EUROPEAN PATENT APPLICATION

(11) **EP 1 024 589 A1**
(43) Date of publication of application: **02.08.2000**
(21) Application number: 98947942.3
(22) Date of filing: 19.10.1998
(51) Int. Cl.: H02P 6/18

(54) **METHOD AND DEVICE FOR CONTROLLING BRUSHLESS DC MOTOR**

(30) Priority: 17.10.1997 JP 28506597
(71) Applicant: Daikin Industries, Ltd., Osaka-shi Osaka 530-8323 (JP)
(72) Inventor: KIMURA, Taizou, Ootsu-shi, Shiga 520-2101 (JP); ITAGAKI, Tetsuya, Daikin Industries, Ltd., Kusatsu-shi, Shiga 525-0044 (JP)
(74) Representative: Prüfer, Lutz H., Dipl.-Phys.
(86) International application number: JP9804726
(87) International publication number: WO9921271

(57) **Abstract**

The present invention counts a rotation position detection signal, calculates a present electrical angle phase, and controls an inverter (2) based upon the count value of the rotation position detection signal and the calculated electrical angle phase so as to output a pulse width modulation voltage having a sine wave pattern, so that a rotation position of a rotor of a brushless DC motor (1) is detected without hall elements or the like and that disadvantages at commutation timings are prevented from occurrence.

## Description

### Technical Field

The present invention relates to a method and apparatus for controlling a brushless DC motor. More particularly, the present invention relates to a method and apparatus for controlling a brushless DC motor which detect a rotation position of a rotor of a brushless DC motor based upon a first center point voltage and a second center point voltage and control an inverter based upon the detected rotation position, the first conter point voltage being a voltage at a connection point of stator windings of the brushless DC motor to which operation voltages are applied from the inverter, while the second center point voltage being a voltage at a connection point of resistors each of which is connected in parallel to each stator winding of the brushless DC motor.

### Background Art

From the past, it is known that detection of a rotation position of a rotor and controlling of an inverter based upon the rotation position detection signal are required for controlling a brushless DC motor, the inverter applying operation voltages to the brushless DC motor. Wherein, an apparatus employing sensors or the like which use hall elements is known as an apparatus for detecting a rotation position of a rotor (refer to Japanese Patent Laid-Open Gazett No. Tokukaihei 9-149679).

Further, it is generally employed that voltage waveforms of an inverter are determined to be rectangular waves.

When a brushless DC motor is employed as a driving source of a compressor of an air conditioner, for example, it is difficult that an apparatus employing sensors or the like which use hall elements is employed for detecting a rotation position of a rotor because an inner environment is bad. That is, an application extent of a brushless DC motor is limited which employs an apparatus employing sensors or the like which use hall elements, for detecting a rotation position of a rotor. Further, a disadvantage arises in that errors in rotation position detection signals are generated due to lowering in providing accuracy of hall elements.

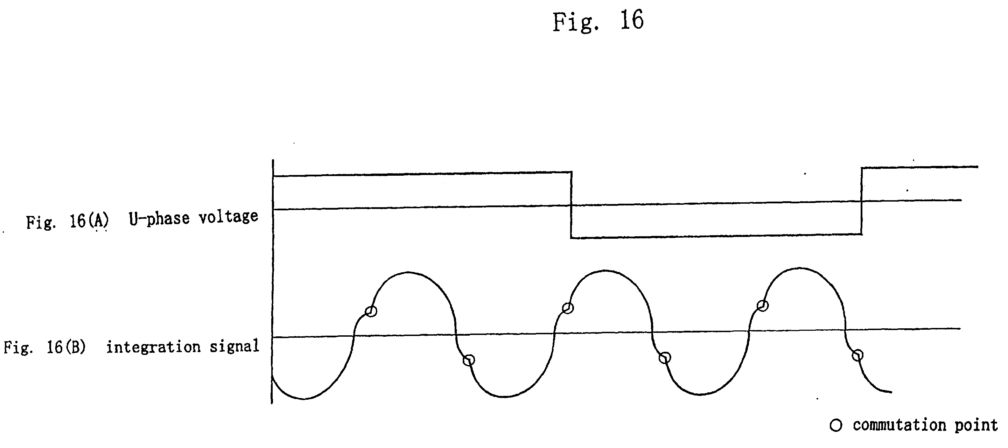

To dissolve the above disadvantages, it can be thought that an apparatus for detecting a rotation position of a rotor is employed which rotation position is detected by determining inverter waveforms to be 120 degrees conduction waveforms and by detecting induced voltages of a motor which are generated during non-conduction intervals. But, disadvantages arise in that flux utilizing efficiency of permanent magnets of a rotr is low due to employing of 120 degrees conduction waveforms and in that lowering in efficiency and generation in noise become issues and the like due to generation of torque ripples at commutation timings. When a brushless DC motor is driven by determining inverter waveforms to be rectangular waves {refer to Fig. 16(A)}, an integration waveform of an output signal from a rotation position detector becomes a waveform illustrated in Fig. 16(B) so that non-smooth changing points are generated at commutation points of inverter voltages. When the changing points are positioned at zero-cross points, errors in rotation position detection signals are generated so that controlling characteristic of a brushless DC motor becomes worse.

To dissolve such disadvantages due to commutation timings, it can be thought that voltage waveforms of an inverter are determined to be sine waves, position detector for detecting an accurate rotation position such as an expensive encoder of about 1024 pulses per one rotation or the like is required for performing sine wave modulation, and reliability is noy guaranteed when the encoder or the like is disposed in an interior of a compressor, so that an application extent is limited.

The present invention was made in view of the above problems.

It is an object of the present invention to offer a method and apparatus for controlling a brushless DC motor which detect a rotation position of a rotor without hall elements or the like and prevent generation of disadvantages at commutation timings.

### Disclosure of the Invention

A method for controlling a brushless DC motor according to claim 1 is a method for detecting a rotation position of a rotor of a brushless DC motor based upon a first center point voltage and a second center point voltage and for controlling an inverter based upon the detected rotation position, the first center point voltage being a voltage at a connection point of stator windings of the brushless DC motor to which operation voltages are applied from the inverter, while the second center point voltage being a voltage at a connection point of resistors each of which is connected in parallel to each stator winding of the brushless DC motor, the method comprises steps of;
counting a rotation position detection signal;
calculating a present electrical angle phase; and
controlling the inverter based upon the count value of the rotation position detection signal and the calculated electrical angle phase so as to output a pulse width modulation voltage having a sine wave pattern.

A method for controlling a brushless DC motor according to claim 2 is a method which counts the rotation position detection signal and calculates the present electrical angle phase from a standard timer value which corresponds to an edge of the rotation position detection signaal and a present timer value.

An apparatus for controlling a brushless DC motor according to claim 3 is an apparatus for detecting a rotation position of a rotor of a brushless DC motor based upon a first center point voltage and a second center point voltage and for controlling an inverter based upon the detected rotation position, the first center point voltage being a voltage at a connection point of stator windings of the brushless DC motor to which operation voltages are applied from the inverter, while the second center point voltage being a voltage at a connection point of resistors each of which is connected in parallel to each stator winding of the brushless DC motor, the apparatus comprises;
a rotation position detection signal counting means for counting a rotation position detection signal;
a electrical angle phase calculation means for calculating a present phase in electricasl angle; and
an inverter controlling means for controlling the inverter based upon the count value of the rotaion position detection signal and the calculated electrical angle phase so as to putput a pulse width modulation voltage having a sine wave pattern.

An apparatus for controlling a brushless DC motor according to claim 4 employs the electrical angle phase calculation means which calculates a present electrical angle phase based upon a standard timer value at an edge of the rotation position detection signal and a present timer value.

An apparatus for controlling a brushless DC motor according to claim 5 employs the electrical angle phase calculation means which includes a standard timer value determination means for holding a timer value at an edge of the rotation position detection signal and for determining the held timer value as the standard timer value.

An apparatus for controlling a brushless DC motor according to claim 6 employs the electrical angle phase calculation means which includes a standard timer value determination means for reading a timer value at an edge of the rotation position detection signal by a highest priority interruption operation and for determining the read timer value as the standard timer value.

When the method for controlling a brushless DC motor according to claim 1 is employed, during the method detects the rotation position of the rotor of the brushless DC motor based upon the first center point voltage and the second center point voltage and controls the inverter based upon the detected rotation position, the first center point voltage being a voltage at a connection point of stator windings of the brushless DC motor to which operation voltages are applied from the inverter, while the second center point voltage being a voltage at a connection point of resistors each of which is connected in parallel to each stator winding of the brushless DC motor, the method counts the rotation position detection signal, calculates the present electrical angle phase, and controls the inverter based upon the count value of the rotation position detection signal and the calculated electrical angle phase so as to output the pulse width modulation voltage having a sine wave pattern. Therefore, the rotation position of the rotor is detected without hall elements or the like, and the accurate electrical angle phase is obtained from the rotation position detection signal so that the inverter is applied sine wave pulse width modulation. Consequently, the disadvantages at commutastion timings are prevented from occurrence so that the brushless DC motor is driven efficiently.

When the method for controlling a brushless DC motor according to claim 2 is employed, the method counts the rotation position detection signal and calculates the present electrical angle phase from the standard timer value which corresponds to the edge of the rotation position detection signaal and the present timer value. Therefore, the present electrical angle phase is easily calculated from the two timer values, and operations and effects which are similar to those of claim 1 are realized.

When the apparatus for controlling a brushless DC motor according to claim 3 is employed, during the apparatus detects the rotation position of the rotor of the brushless DC motor based upon the first center point voltage and the second center point voltage and controls the inverter based upon the detected rotation position, the first center point voltage being a voltage at a connection point of stator windings of the brushless DC motor to which operation voltages are applied from the inverter, while the second center point voltage being a voltage at a connection point of resistors each of which is connected in parallel to each stator winding of the brushless DC motor, the apparatus counts the rotation position detection signal using the rotation position detection signal counting means, calculates the present electrical angle phase using the electrical angle phase calculation means, and controls the inverter using the inverter controlling means based upon the count value of the rotaion position detection signal and the calculated electrical angle phase so as to putput the pulse width modulation voltage having a sine wave pattern. Therefore, the rotation position of the rotor is detected without hall elements or the like, and the accurate electrical angle phase is obtained from the rotation position detection signal so that the inverter is applied sine wave pulse width modulation. Consequently, the disadvantages at commutastion timings are prevented from occurrence so that the brushless DC motor is driven efficiently.

When the apparatus for controlling a brushless DC motor according to claim 4 is employed, the present electrical angle phase is easily calculated from the two timer values, and operations and effects which are similar to those of claim 3 are realized because the apparatus employes the electrical angle phase calculation means which calculates a present electrical angle phase based upon the standard timer value at the edge of the rotation position detection signal and the present timer value.

When the apparatus for controlling a brushless DC motor according to claim 5 is employed, determination of the standard timer value is easily and accurately realized, and operations and effects which are similar to those of claim 3 or claim 4 are realized because the apparatus employs the electrical angle phase calculation means which includes a standard timer value determination means for holding a timer value at an edge of the rotation position detection signal and for determining the held timer value as the standard timer value.

When the apparatus for controlling a brushless DC motor according to claim 6 is employed, determination of the standard timer value is easily and accurately realized, and operations and effects which are similar to those of claim 3 or claim 4 are realized because the apparatus employs the electrical angle phase calculation means which includes a standard timer value determination means for reading a timer value at an edge of the rotation position detection signal by a highest priority interruption operation and for determining the read timer value as the standard timer value.

### Brief Description of the Drawings

Figure 1 is a block diagram illustrating a brushless DC motor controlling apparatus of an embodiment according to the present invention;
Figure 2 is a flowchart explaining a aprtial part of carrier cycle interruption operation;
Figure 3 is a flowchart ezplaining a remaining part of carrier cycle interruption operation;
Figure 4 is a flowchart explaining an interruption operation due to a totation position detection signal;
Figure 5 is a diagram useful in understanding voltage vectors V1-V6;
Figure 6 is a diagram useful in understanding a relationship between an electrical angle and a voltage vector which is to be employed;
Figures 7(A), 7(B) and 7(C) are diagrams useful in understanding a relationship between a rotation position detection signal, a carrier interruption and an output waveform;
Figure 8 is a diagram illustrating a partial part of Figs. 7(B) and 7(C) in an enlarged manner;
Figure 9 is a diagram illustrating another partial part of Figs. 7(B) and 7(C) in an enlarged manner;
Figures 10(A), 10(B) and 10(C) are schematic diagrams useful in understanding a correction operation of a phase correction angle;
Figure 11 is a diagram explaining an example of replacement of an output waveform mode;
Figure 12 is a diagram explaining another example of replacement of an output waveform mode;
Figures 13(A) and 13(B) are diagrams useful in understanding a relationship between a modulation waveform according to the present invention and an integration signal;
Figure 14 is a flowchart explaining a partial part of an operation when a standard point timer value is read using a softwear;
Figure 15 is a flowchart explaining a remaining part of an operation when a standard point timer value is read using a softwear; and
Figures 16(A) and 16(B) are diagrams useful in understanding a relationship between a conventional modulation waveform and an integration signal.

### Best Mode for Carrying Out the Invention

Hereinafter, referring to the attached drawings, we explain a method and apparatus for controlling a brushless DC motor of embodiments according to the present invention in detail.

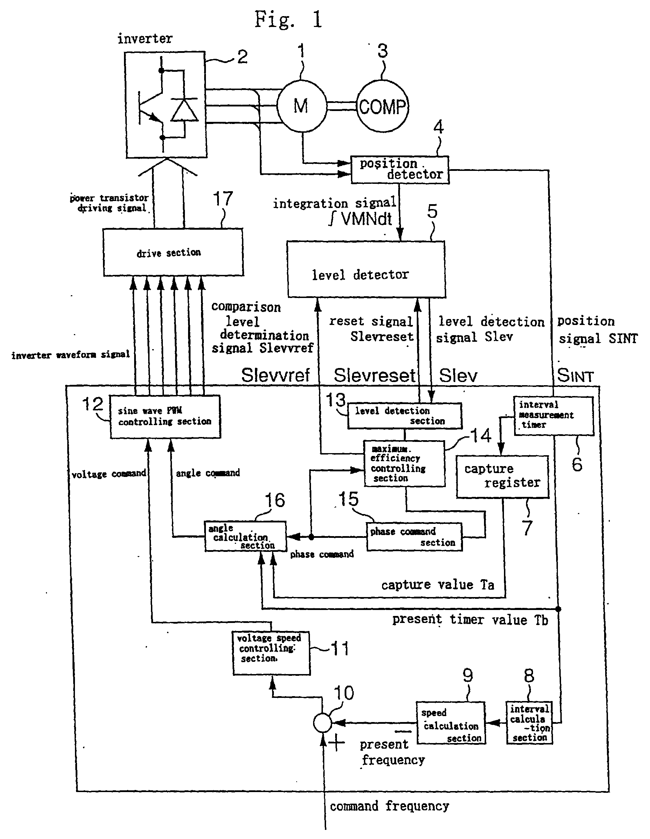

Fig. 1 is a block diagram illustrating an apparatus for controlling a brushless DC motor of an embodiment according to the present invention.

The apparatus for controlling a brushless DC motor applies output voltages from a three-phase inverter 2 to stator windings of a brushless DC motor 1. The brushless DC motor 1 drives a compressor 3.

A first center point voltage at a connection point of stator windings of the brushless DC motor 1 and a second center point voltage at a connection point of resistors (not illustraed) each of which is connected in parallel to each stator winding of the brushless DC motor 1 are supplied to a position detector 4. The position detector 4 receives the both center point voltages, integrates a difference voltage between the both center point voltages so as to output an intengattion signal, and detects zero-cross of the integration signal and outputs the detection signal as a rotation position detection signal therefrom.

The integration signal is supplied to a level detector 5. And, the level detector 5 outputs a level detection signal therefrom. Further, the rotation position detection signal is supplied to an interval measurement timer 6.

A timer value of the interval measurement timer 6 is supplied to a capture register 7 and an interval calculation section 8. The capture register 7 takes a timer value from the interval measurement timer 6 and temporarily holds the timer value, the timer value being a timer value at an edge of the rotation position detection signal. The interval calculation section 8 calculates a timer value from an edge of the rotation position detection signal to an edge of next rotation position detection signal and calculates an interval based upon the timer value.
the interval calculation result output from the interval calculation section 8 is supplied to a speed calculation section 9. A present speed (a present frequency) output from the speed calculation section 9 is supplied to a subtraction section 10, and a command frequency is also supplied to the subtraction section 10. A difference frequency output from the subtraction section 10 is supplied to a voltage speed controlling section 11. a voltage command output from the voltage speed controlling section 11 is supplied to a sine wave PWM (pulse width modulation) control section 12.

The level detection signal output from the level detector 5 is supplied to a level detection section 13. An output signal from the level detection section 13 is supplied to a maximum efficiency controlling section 14. A phase correction angle output from the maximum efficiency controlling section 14 is supplied to a phase command section 15. A phase command output from the phase command section 15, contents (for example, a capture value Ta) of the capture registor 7 and a present timer value Tb are supplied to an angle calculation section 16. An angle command output from the angle calculation section 16 is supplied to the sine wave PWM controlling section 12. Further, a reset signal from the level detection section 13 is supplied to the level detector 5 and a comparison level determination signal output from the maximum efficiency controlling section 14 is supplied to the level detector 5. The level detection section 13 takes the level detection signal from the level level detector 5 and temporarily holds the level detection signal. The level detection section 13 then resets the level detector 5 so as to provide next level detection by the level detector 5. The maximum efficiency controlling section 14 controls the phase correction angle so as to determine the integration signal level to be a predetermined integration signal level, for example. That is, the maximum efficiency controlling section 14 controls the phase correction angle so that the phase correction angle is advanced when the integration signal is smaller than the predetermined intengation signal level, while the phase correction angle is delayed when the integration signal is smaller than the predetermined intengation signal level, and the maximum efficiency controlling section 14 outputs a phase command indication signal for realizing maximum efficiency operation based upon the phase command output from the phase command section 15 in addition. The angle calculation section 16 receives the phase command, the capture value and the present timer value, obtains the angle command and outputs the angle command therefrom.

The inverter waveform signal output from the sine wave PWM controlling section 12 is supplied to the three-phase inverter 2 through a drive section 17.

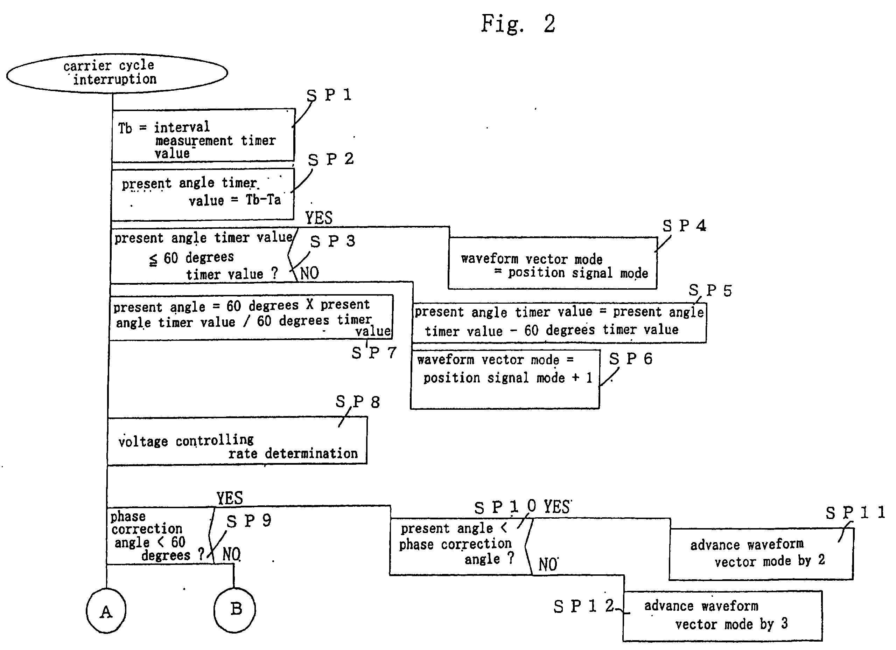

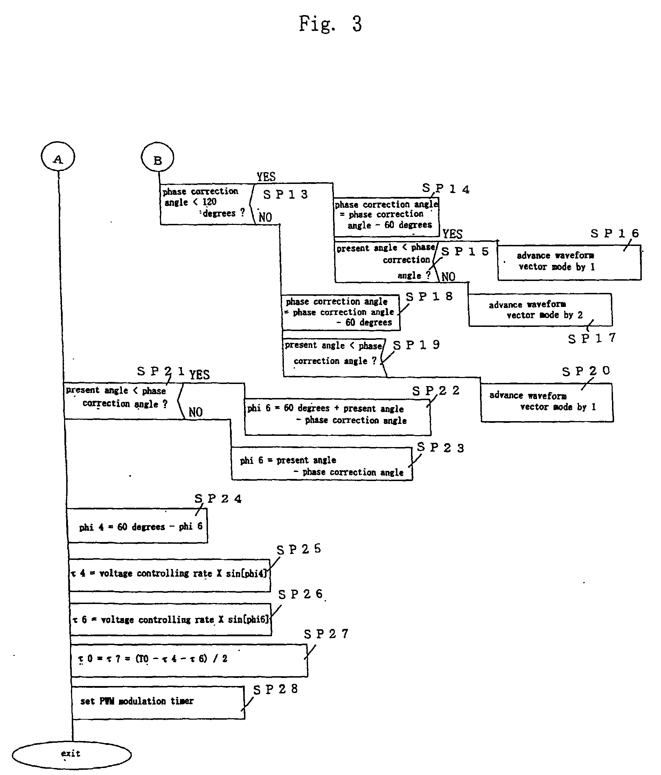

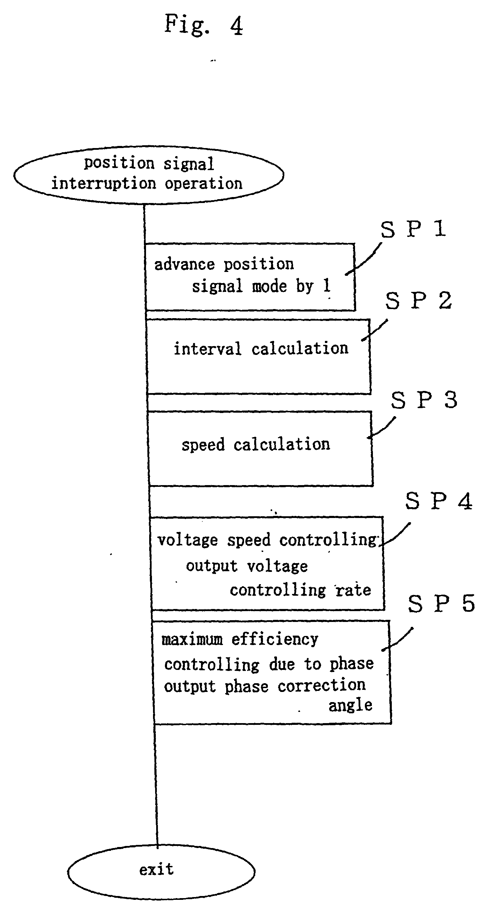

Next, flowcharts in Figs. 2-4 are explained. Wherein, Figs. 2 and 3 are flowcharts explaining a carrier cycle interruption operation, while Fig. 4 is a flowchart explaining an interruption operation due to the rotstion position detection signal.

First, the carrier cycle interruption operation is explained.

In step SP1, a value Tb of the interval measurement timer 6 is read. In step SP2, a timer value Ta is subtracted from the timer value Tb so as to calculate a present angle timer value, the value Ta being a value obtained by holding a timer value of the interval measurement timer 6 at an edge of the rotation position detection signal. In step SP3, it is judged whether or not the present angle timer value is equal to or less than a timer value corresponding to 60 degrees (hereinsfter, referred to as 60 degrees timer value). When it is judged in step SP3 that the present angle timer value is equal to or less than the 60 degrees timer value, in step SP4, the rotation position detection signal mode is determined to be a waveform vector mode. On the contrary, when it is judged in step SP3 that the present angle timer value is greater than the 60 degrees timer value, in step SP5, the 60 degrees timer value is subtracted from the present angle timer value, and the subtraction result is determined to be a new present angle timer value. In step SP6, the rotation position detection signal mode is incremented by 1, and the incremented rotation position detection signal mode is determined to be a waveform vector mode.

After the operation in step SP4 or the operation in step SP6 has finished, in step SP7, a present angle is calculated by dividing a value by the 60 degrees timer value, the value being obtained by multiplying 60 degree and the present angle timer value. In step SP8, a voltage controlling rate is determined.

Then in step SP9, it is judged whether or not the phase correction angle is less than 60 degrees. When it is judged in step SP9 that the phase correction angle is less than 60 degrees, in step SP10, it is judged whether or not the present angle is less than the phase correction angle. When it is judged in step SP10 that the present angle is less than the phase correction angle, in step SP11, the waveform vector mode is advanced by 2 with respect to the number of the rotation position detection signal. When it is judged in step SP10 that the present angle is equal to or greater than the phase correction angle, in step SP12, the waveform vector mode is advanced by 3 with respect to the number of the rotation position detection signal.

When it is judged in step SP9 that the phase correction angle is equal to or greater than 60 degrees, in step SP13, it is judged whether or not the phase correction angle is less than 120 degrees. When it is judged in step SP13 that the phase correction angle is less than 120 degrees, in step SP14, an angle is determined to be a new phase correction angle, the angle corresponding to an angle which is obtained by subtracting 60 degrees from the phase correction angle. In step 15, it is judged whether or not the present angle is less than the phase correction angle. When it is judged in step SP15 that the present angle is less than the phase correction angle, in step SP16, the waveform vector mode is advanced by 1 with respect to the number of the rotation position detection signal. When it is judged in step SP15 that the present angle is equal to or greater than the phase correction angle, in step SP17, the waveform vector mode is advanced by 2 with respect to the number of the rotation position detection signal.

When it is judged in step SP13 that the phase correction angle is equal to or greater than 120 degrees, in step SP18, an angle obtained by subtracting 120 degrees from the phase correction angle is determined to be a new phase correction angle. In step SP19, it is judged whether or not the present angle is less than the phase correction angle. When it is judged in step SP19 that the present angle is less than the phase correction angle, judgement is made in step SP21 which is described later. When it is judged in step SP19 that the present angle is equal to or greater than the phase correction angle, in step SP20, the waveform vector mode is advanced by 1 with respect to the number of the rotation position detection signal.

When one of operations in steps SP11, SP12, SP16, SP17 and SP20 has finished, or it is judged in step SP19 that the present angle is less than the phase correction angle, in step SP21, it is judged whether or not the present angle is less than the phase correction angle. When it is judged in step SP21 that the present angle is less than the phase correction angle, in step SP22, an angle which is obtained by adding 60 degrees to the present angle and by subtracting the phase correction angle from the sum, is determined to be a voltage vector angle Φ 6. When it is judged in step SP21 that the present angle is equal to or greater than the phase correction angle, in step SP23, an angle obtained by subtracting the phase correction angle from the present angle, is determined to be a voltage vector angle Φ 6.

When the operation in step SP22 or the operation in step SP23 has finished, in step SP24, an angle obtained by subtracting Φ 6 from 60 degrees, is determined to be a voltage vector angle Φ 4. In step SP25, multiplication of the voltage controlling rate, sin Φ 4 and a carrier timer value T0 is carried out and the multiplication result is determined to be a voltage vector timer value τ 4. In step SP26, multiplication of the voltage controlling rate, sin Φ 6 and a carrier timer value T0 is carried out and the multiplication result is determined to be a voltage vector timer value τ 6. In step SP27, τ 4 and τ 6 are subtracted from the carrier timer value T0, the subtraction result is divided by 2, and the division result is determined to be voltage vector timer values τ 0 and τ 7. In step SP28, a pulse width modulation timer is set. Then the series of operations have finished.

Next, the interruption operation due to the rotation position detection signal is described.

In step SP1, a position signal mode ia advanced by 1. In step SP2, interval calculation is carried out. In step SP3, speed calculation is carried out. In step SP4, voltage speed controlling ia carried out and a voltage controlling rate is output. In step SP5, maximum efficiency controlling by the phase is carried out and the phase correction angle is output. Then, the series of operations have finished.

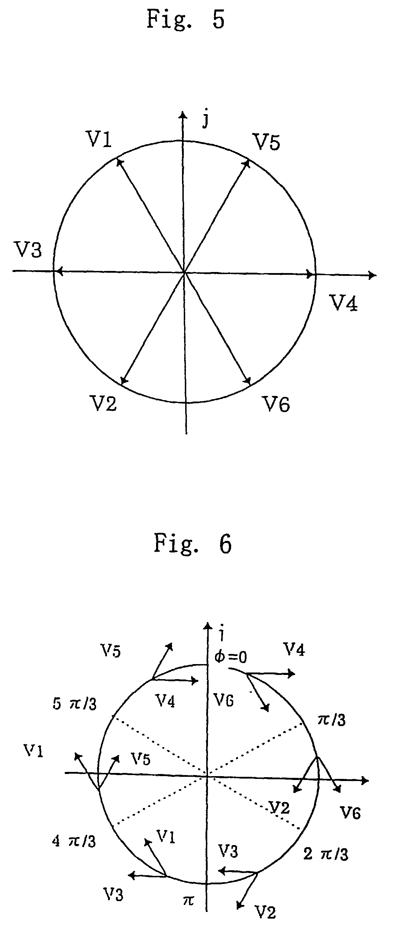

The voltage vectors V1-V6 used for carrying out PWM controlling are voltage vectors illustrated in Fig. 5. The voltage vectors V0 and V7 are zero vectors. Further, τ 0, τ 4, τ 6 and τ 7 are continuation time period of the voltage vectors V0, V4, V6 and V7, respectively.

Description is made in more detail.

Fig. 6 is a diagram useful in understanding a relationship between the angle Φ and the voltage vector which is to be used.

As is apparent from Fig. 6, the voltage vectors V4 and V6 are employed within an extent of the angle Φ to be 0-π/3, the voltage vectors V2 and V6 are employed within an extent of the angle to be π/3-2π/3, the voltage vectors V2 and V3 are employed within an extent of the angle Φ to be 2π /3-π, the voltage vectors V1 and V3 are employed within an extent of the angle Φ to be π-4π/3, the voltage vectors V1 and V5 are employed within an extent of the angle Φ to be 4π/3-5π/3, and the voltage vectors V4 and V5 are employed within an extent of the angle Φ to be 5π/3-2π. Further, the zero vector V0 or V7 is additionally employed in any one of the extents for preventing the size of the combined voltage vector becoming too great.

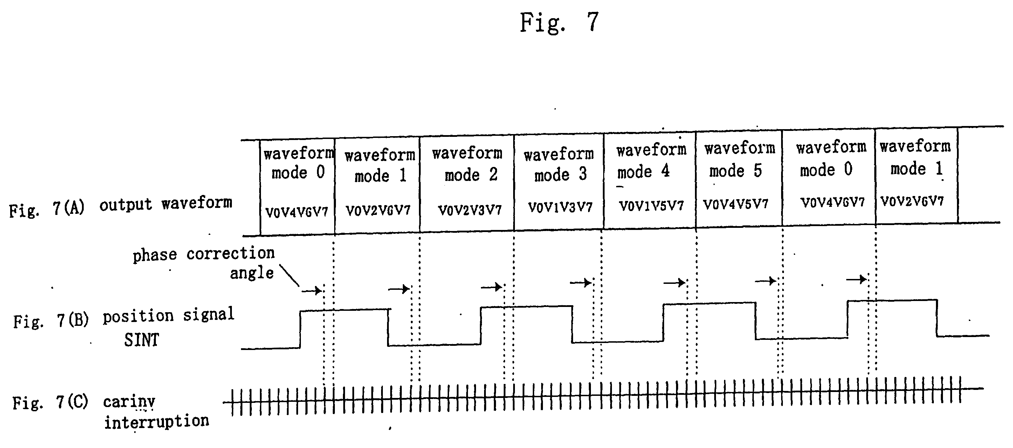

Figs. 7(A), 7(B) and 7(C) are diagrams useful in understanding a relationship between the rotation position detection signal, the carrier interruption (the interruption generated at every interval of the pulse width modulation) and the output waveform.

As is illustrated in Fig. 7(C), the operation of the flowchart illustrated in Figs 2 and 3 is carried out at every carrier interruption. And, as is illustrated in Fig. 7(B), when the rotation position detection signal is obtained, the operastion of the flowchart illustrated in Fig. 4 is carried out at the edge of the rotation position detection signal. And, as is illustrated in Fig. 7(A), the output waveform vector mode is changed based upon the phase correction angle which is obtained by carrying out the operation of the flowchart illustrated in Fig. 4.

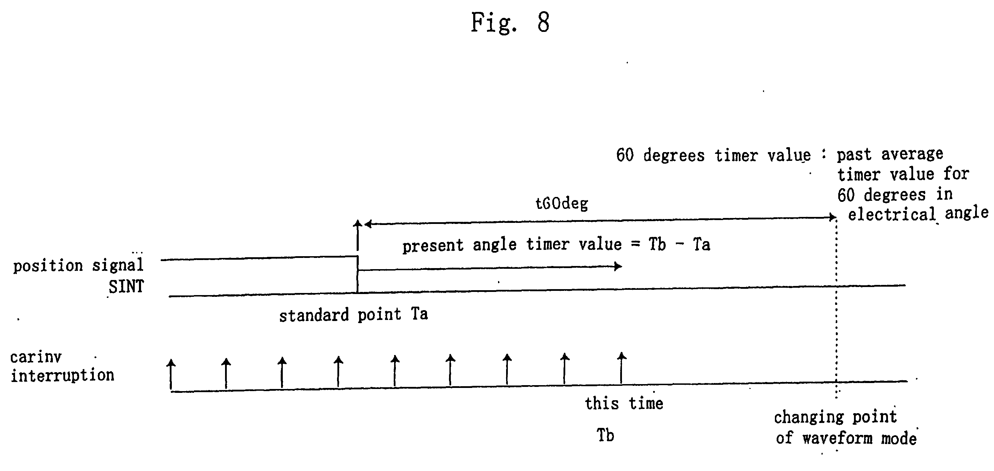

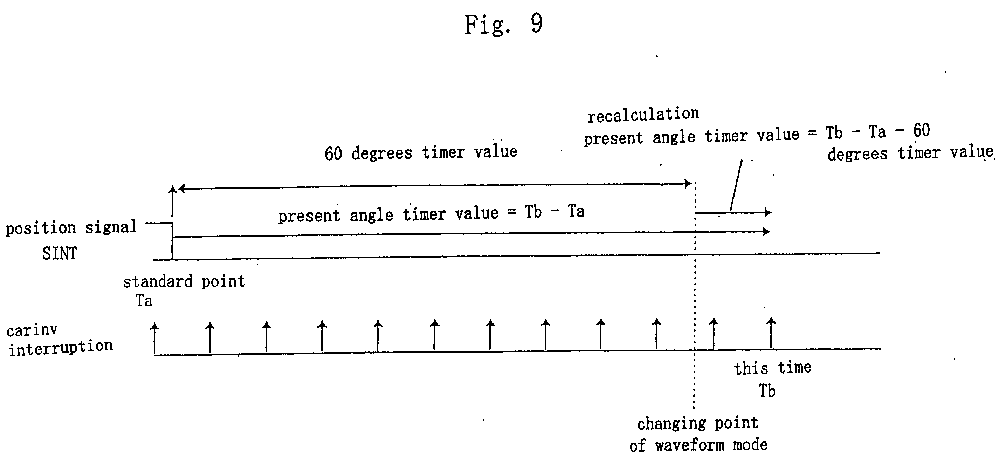

Figs. 8 and 9 are diagrams each illustrating a partial part of Figs. 7(B) and 7(C) in an enlarged manner.

In any of Figs. 8 and 9, a falling edge of the rotation position detection signal is determined to be a standard point Ta, and a present angle timer value Tb-Ta is calculated. And, the present angle timer value Tb-Ta and the 60 degrees timer value (past average timer value for electrical angle of 60 degrees) are judged their values to one another. When the present angle timer value Tb-Ta is equal to or less than the 60 degrees timer value, the present angle timer value Tb-Ta is not changed and this angle is used for present angle calculation, as is illustrated in Fig. 8. On the contrary, when the present angle timer value Tb-Ta is greater than the 60 degrees timer value, the 60 degrees timer value is subtracted from the present angle timer value Tb-Ta, the subtraction result is employed as a new present angle timer value, and the output waveform vector mode is changed, as is illustrated in Fig. 9.

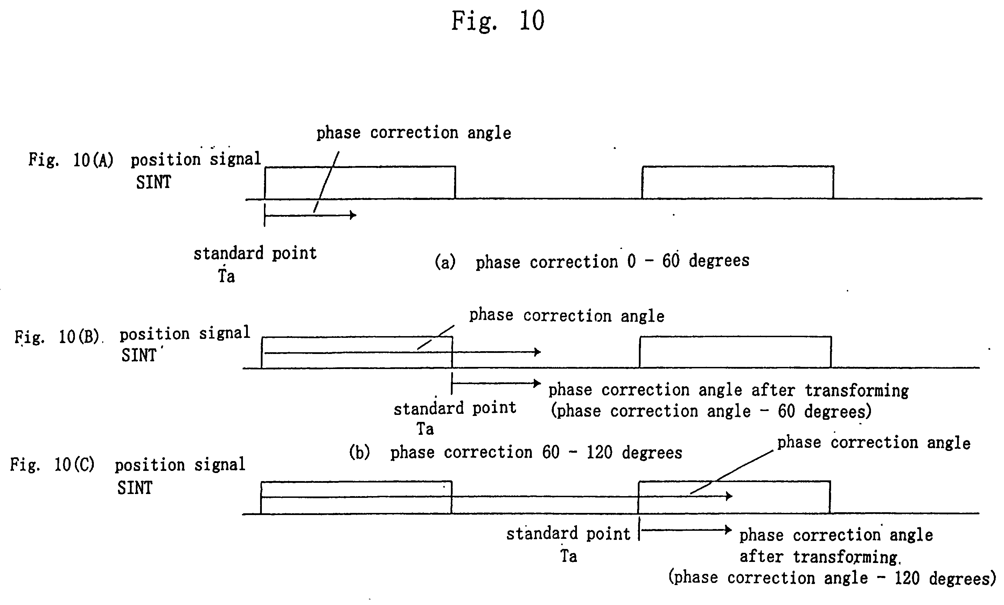

Figs. 10(A), 10(B) and 10(C) are schematic diagrams explaining a correction operation (operation of steps SP9, SP13, SP14 and SP18) of the phase correction angle.

Fig. 10(A) represents a case wherein the phase correction angle is less than 60 degrees, Fig. 10(B) represents a case wherein the phase correction angle is equal to or greater than 60 degrees and is less than 120 degrees, and Fig. 10(C) represents a case wherein the phase correction angle is equal to or greater than 120 degrees.

The phase correction angle is employed as it is for the case illustrated in Fig. 10(A), an angle obtained by subtracting 60 degrees from the phase correction angle is employed as a new phase correction angle for the case illustrated in Fig. 10(B), and an angle obtained by subtracting 120 degrees from the phase correction angle is employed as a new phase correction angle for the case illustrated in Fig. 10(C). Further, positions each shifted by the subtraction angle are determined to be new standard points Ta for the case illustrated in Fig. 10(B) and for the case illustrated in Fig. 10(C).

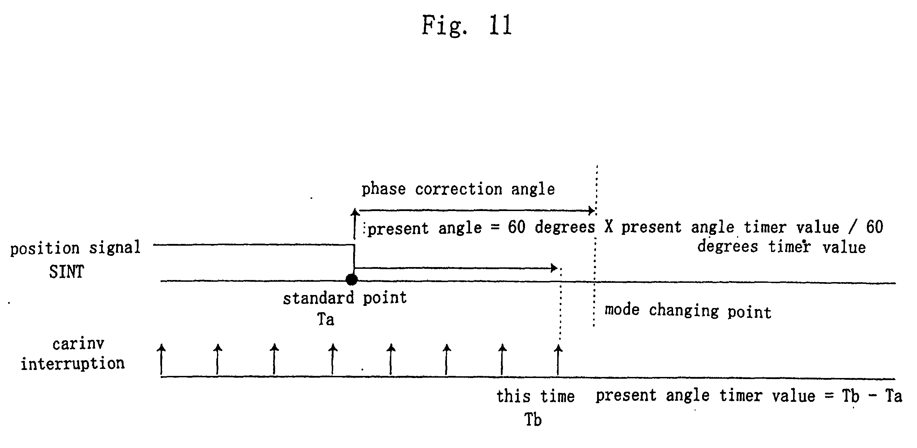

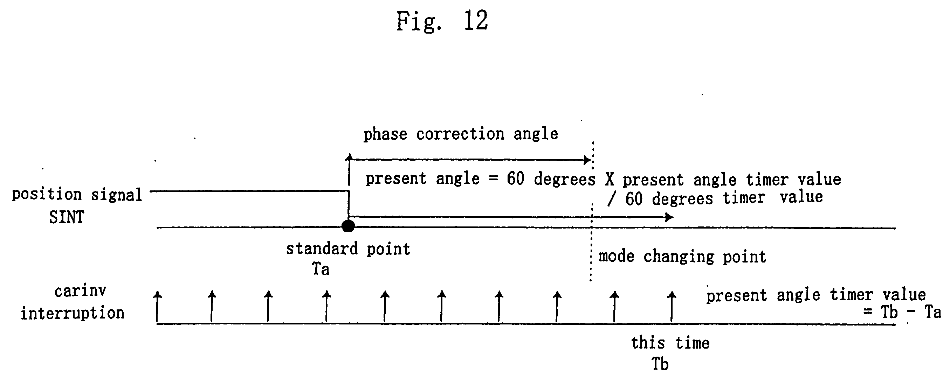

Figs. 11 and 12 are diagrams explaining change of output waveform mode (operation of steps SP 19 and SP20).

Fig. 11 represents a case where the present angle is less than the phase correction angle. The case maintains the present output waveform vector mode as it is, because the timing determined based upon the phase correction angle is determined to be a mode changing point. While, Fig. 12 represents a case where the present angle is greater than the phase correction angle. The case advances the output waveform vector mode by 1, because the timing determined based upon the phase correction angle (the timing of prior angle with respect to the present angle) is determined to be a mode changing point.

When the operation of Fig. 11 or Fig. 12 is applied to the case illustrated in Fig. 10(B), the operation corresponds to the steps SP16 and SP17, because the output waveform vector mode is advanced by 1 by the operation of the case illustrated in Fig. 10(B). When the operation of Fig. 11 or Fig. 12 is applied to the case illustrated in Fig. 10(A), the operation corresponds to the steps SP11 and SP12, because the output waveform vector mode is advanced by 2 by the operation of the case illustrated in Fig. 10(A).

Summarizing the above, the timer value of the interval measurement timer 6 which operates in freely running manner, is taken and held by the capture register 7 at the edge timing of the rotation position detection signal. The timer value may be read using an interruption operation having the highest priority.

The timer value is determined to be the standard point (standard point timer value) Ta represented in Fig. 8 and Fig. 9 which timer value is held or read in such manner.

The present angle timer value corresponding to the present electric phase angle is obtained by calculating a difference between the timer value Tb of the interval measurement timer 6 and the standard point timer value Ta at every interval of the pulse width modulation.

Then, the present angle timer value is compared to the 60 degrees timer value. When the present angle timer value is equal to or less than the 60 degrees timer value, the rotation position detection signal mode is determined to be the output waveform vector mode, because the present angle timer value is prior to the changing point of the output waveform vector mode, as is illustrated in Fig. 8. On the contrary, when the present angle timer value is greater than the 60 degrees timer value, the present angle timer value is changed and the rotation position detection signal mode is incremented by 1 and is determined to be the output waveform vector mode, because the present angle timer value is after the changing point of the output waveform vector mode, as is illustrated in Fig. 9.

Thereafter, the voltage controlling rate is determined, the phase correction angle is judged whether the the phase correction angle is within the extent of 0-60 degrees, within the extent of 60-120 degrees, or within the extent of 120-180 degrees, as are illustrated in Figs. 10(A), 10(B) and 10(C), and the phase correction angle is employed as it is or the phase correction angle is corrected corresponding to each extent. Then, the present angle and the phase correction angle are compared to one another, as is illustrated in Figs. 11 and 12 for example. Determination is made based upon the compasrison result, whether the output waveform vector mode is employed as it is, the output waveform vector mode is advanced. When the output waveform vector mode is to be advanced, determination is made how many modes the output waveform vector mode should be advanced.

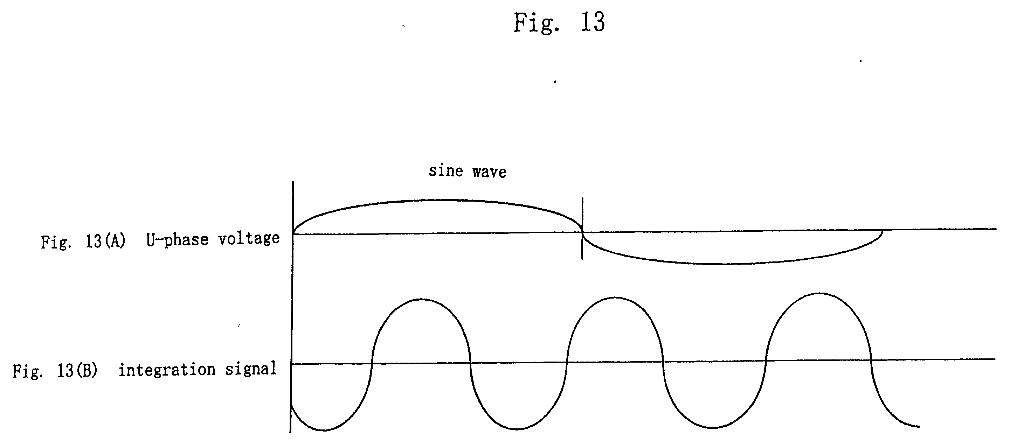

Further, the voltage vector angle is calculated and the voltage vector timer value is calculated, then the timer for pulse width modulation is set. Therefore, the inverter 2 is applied the sine wave pulse width modulation, as is illustrated in Fig. 13(A), and the disadvantage at commutation timings are prevented from occurrence. as is illustrated in Fig. 13(B), so that the brushless DC motor 1 is driven efficiently. Of course, it is not necessary that hail elements or the like are provided in an interior of a compressor which has bad condition, and the rotation position of the rotor of the brushless DC motor is detected with accuracy.

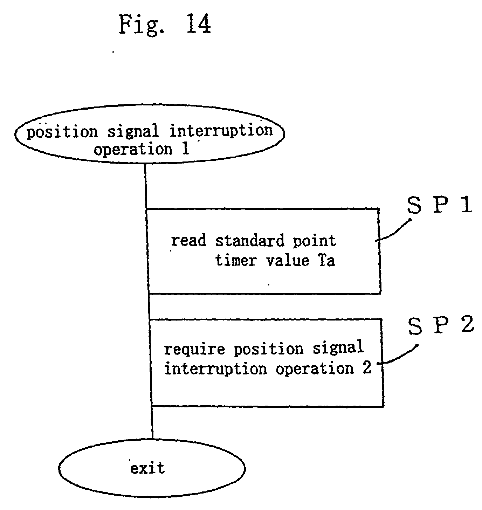

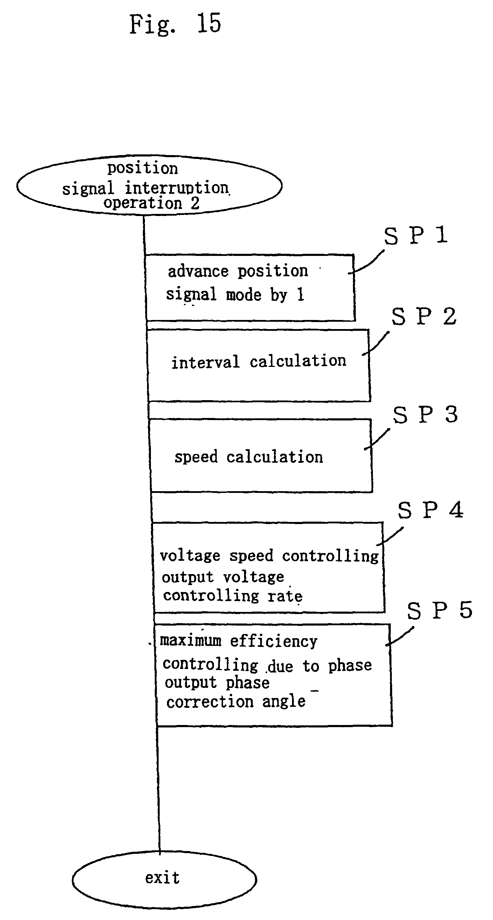

Figs 14 and 15 are flowcharts explaining operations for a case where the standard point timer value is read using a softwear. Wherein, the operation of Fig. 14 is a rotation position detection signal interruption operation 1 (interruption operation having the highest priority), while the operation of Fig. 15 is a rotation position detection signal interruption operation 2 (interruption operation having a lower priority level).

In step SP1 of the flowchart of Fig. 14, the standard point timer value Ta is read. In step SP2, the rotation position detection signal interruption operation 2 is required. Then, the series of operations have finished.

In step SP1 of the flowchart of Fig. 15, the position signal mode is advanced by 1. In step SP2, the interval calculation is carried out. In step SP3, the speed calculation is carried out. In step SP4, the voltage speed controlling is carried out and the voltage controlling rate is output. In step SP5, the maximum efficiency controlling by the phase is carried out and the phase correction angle is output. Then, the series of operations have finished.

Therefore, when the operations of the flowcharts of Figs. 14 and 15 are employed, operations and effects can be realized which are similar to those of the case where the standard point timer value is held using the capture register 7. Of course, the timing of the edge of the rotation position detection signal is detected with accuracy even when softwear multiple interruptions are generated. As a result, the standard point of the position signal is obtained with accuracy so that the sine wave modulation is realized with high accuracy.

The integration signal level is narrowed to be more small level so that the motor efficiency is improved more, because deformation in the integration signal is omitted due to the employment of the sine wave moduletion. As a result, the controlling and energy saving are realized which are equal to or greater than those in a cse where constant width pulse width modulation is carried out.

Further, the present invention is not limited to the above embodiments. It is possible, for example, that the control is carried out by determining the speed control output to be the phase correction angle and by determining the maximum efficiency control output to be the voltage controlling rate, that the maximum efficiency controlling section, the level detector and the level detection section rach having the other arrangements are employed, and that the speed controlling and the maximum efficiency controlling are carried out based upon an operation other than the position signal interruption.

### Industrial Applicability

The present invention realizes the speed controlling and the maximum efficiency controlling of a brushless DC motor without specially providing a position detecting device, and is favorably applicable to many species of apparatus which employ a brushless DC motor as a driving source.

## Claims

1. A method for controlling a brushless DC motor which is a method for detecting a rotation position of a rotor of a brushless DC motor (1) based upon a first center point voltage and a second center point voltage and for controlling an inverter (2) based upon the detected rotation position, the first center point voltage being a voltage at a connection point of stator windings of the brushless DC motor (1) to which operation voltages are applied from the inverter (2), while the second center point voltage being a voltage at a connection point of resistors each of which is connected in parallel to each stator winding of the brushless DC motor (1), the method comprises the steps of;
counting a rotation position detection signal;
calculating a present electrical angle phase; and
controlling the inverter (2) based upon the count value of the rotation position detection signal and the calculated electrical angle phase so as to output a pulse width modulation voltage having a sine wave pattern.

2. A method for controlling a brushless DC motor as set forth in claim 1, wherein the method counts the rotation position detection signal and calculates the present electrical angle phase based upon a standard timer value which corresponds to an edge of the rotation position detection signaal and a present timer value.

3. An apparatus for controlling a brushless DC motor which is an apparatus for detecting a rotation position of a rotor of a brushless DC motor (1) based upon a first center point voltage and a second center point voltage and for controlling an inverter (2) based upon the detected rotation position, the first center point voltage being a voltage at a connection point of stator windings of the brushless DC motor (1) to which operation voltages are applied from the inverter (2), while the second center point voltage being a voltage at a connection point of resistors each of which is connected in parallel to each stator winding of the brushless DC motor (1), the apparatus comprising;
a rotation position detection signal counting means for counting a rotation position detection signal;
an electrical angle phase calculation means for calculating a present phase in electricasl angle; and
an inverter controlling means for controlling the inverter (2) based upon the count value of the rotaion position detection signal and the calculated electrical angle phase so as to putput a pulse width modulation voltage having a sine wave pattern.

4. An apparatus for controlling a brushless DC motor as set forth in claim 3, wherein the apparatus comprises an electrical angle phase calculation means which calculates a present electrical angle phase based upon a standard timer value at an edge of the rotation position detection signal and a present timer value, as the electrical angle phase calculation means.

5. An apparatus for controlling a brushless DC motor as set forth in claim 3 or claim 4, wherein the electrical angle phase calculation means includes a standard timer value determination means for holding a timer value at an edge of the rotation position detection signal and for determining the held timer value as the standard timer value.

6. An apparatus for controlling a brushless DC motor as set forth in claim 3 or claim 4, wherein the electrical angle phase calculation means includes a standard timer value determination means for reading a timer value at an edge of the rotation position detection signal by a highest priority interruption operation and for determining the read timer value as the standard timer value.
